(19)

**Europäisches Patentamt**

**European Patent Office**

**Office européen des brevets**

(11) **EP 3 745 587 A2**

(12) **EUROPEAN PATENT APPLICATION**

(43) Date of publication:
**02.12.2020   Bulletin 2020/49**

(51) Int Cl.:
***H02P 6/20*** (2016.01)

(21) Application number: **20172336.8**

(22) Date of filing: **30.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:   **29.05.2019   JP 2019099931**

(71) Applicant: **Hitachi, Ltd.**
**Tokyo 100-8280 (JP)**

(72) Inventors:
- **WATANABE, Kenta**
  **Tokyo, 100-8280 (JP)**
- **KIKUCHI, Akira**
  **Tokyo, 100-8280 (JP)**
- **KAWAZOE, Hironari**
  **Tokyo, 100-8280 (JP)**
- **KIYOFUJI, Yasuhiro**
  **Tokyo, 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **POWER CONVERSION DEVICE AND VARIABLE-SPEED PUMPED-STORAGE POWER GENERATION SYSTEM**

(57)   Provided are a high-efficiency power conversion device and a variable-speed pumped-storage power generation system that can achieve long life span and improved reliability. A power conversion device includes a bypass switch connected in parallel to a frequency converter for performing AC-AC conversion including a converter for performing AC-DC conversion and a converter for performing DC-AC conversion. A control device of the frequency converter includes an AC current control unit (301) that controls an AC current flowing to the frequency converter, a DC current control unit (302) that controls a DC current flowing to the frequency converter, and a zero-phase current control unit (303) that controls a zero-phase current flowing to the bypass switch. The zero-phase current control unit (303) is operated when the bypass switch and the frequency converter are switched.

FIG. 3

Printed by Jouve, 75001 PARIS (FR)

**Description**

Technical Field

The present invention relates to a power conversion device and a variable-speed pumped-storage power generation system, and more particularly to a power conversion device in which a parallel circuit is connected and a variable-speed pumped-storage power generation system.

Background Art

A pumped storage power generation system, in which a rotating machine connected to a water turbine and a power system are interconnected via a frequency converter, includes regulating reservoirs on the upper and lower parts of the rotating machine (hereinafter referred to as a power generation motor in particular), and generates power by causing water pumped from the lower regulating reservoir to the upper regulating point to flow from the upper regulating reservoir to an AQ lower regulating reservoir. The pumped storage power generation system has a feature that the start and stop time is shorter than that of thermal power generation, and is excellent as a power source for adjusting supply and demand.

In the pumped storage power generation system, there is a form in which a frequency converter is connected between a primary winding or a secondary winding of a generator and an electric power system for the purpose of increasing efficiency by making the rotation speed of a water turbine variable. As a frequency converter, a self-excited voltage-type converter using a power semiconductor switching element such as an IGBT (hereinafter, referred to as a self-excited converter) is used. The self-excited converter is a power conversion device that converts power between AC and DC using, for example, a pulse width modulation method.

The primary excitation system, in which a frequency converter is connected to the primary winding of the power generation motor, is attracted attention because of features such as a wide variable speed operation range and a contribution to system stability compared to the secondary excitation system in which a frequency converter is connected to the secondary winding. However, in the primary excitation method, even in the synchronous speed operation region where the frequency of the power generation motor and the power system match, the entire load current flows to the frequency converter and power conversion loss occurs. Therefore, there is a problem that higher efficiency in the variable speed operation region is offset by lower efficiency in the synchronous speed operation region.

To solve such a problem, Patent Literature 1 discloses that a bypass switch and a frequency converter are connected in parallel, and when the generator and the power system are operating at a synchronous speed, the bypass switch is closed to directly exchange power between the power system and the generator. According to this configuration, the frequency converter can be bypassed during the synchronous speed operation, so that power conversion loss does not occur and power generation efficiency can be increased.

Citation List

Patent Literature

Patent Literature 1: JP 2003-88190 A

Summary of Invention

Technical Problem

Patent Literature 1 employs a configuration in which a parallel circuit (bypass switch) is connected to a power conversion device (frequency converter). In Patent Literature 1 having such a configuration, when the bypass switch is closed during synchronous speed operation and power is directly exchanged between the power system and the power generation motor, it is desirable to provide a commutation period to continuously commutate the load current flowing to the frequency converter (or the bypass switch) to the other side, and to seamlessly switch the operation mode.

However, there is a problem that a zero-phase current flows through the bypass switch during the commutation period, and the zero-phase current remains even after the commutation of the load current ends. This zero-phase current is a current component generated due to an influence of a dead time of a self-excited converter used as a frequency converter.

In order to switch the operation mode while the zero-phase current remains, the bypass switch needs to be opened while the current is flowing. That is, it is necessary to use, as the bypass switch, a circuit breaker capable of interrupting an accident current or a load switch capable of switching a load current.

Since the pumped-storage power generation system is responsible for system stabilization and supply/demand adjustment, it is conceivable to operate the system by frequently switching operation modes. At that time, if the switching operation is frequently performed in a state where the zero-phase current flows to the bypass switch, there is a problem that the circuit breaker used as the bypass switch, the contact portions of the load switch used as the bypass switch, and the electrodes are worn and the replacement cycle is shortened. Therefore, it is desirable that the opening/closing operation can be performed after the current flowing to the bypass switch is made substantially zero current from the viewpoint of extending the life span of the bypass switch and improving the reliability.

An object of the invention is to provide a high-efficiency power conversion device and a variable-speed pumped-storage power generation system that can achieve long life span and improved reliability.

Solution to Problem

In order to achieve the above object, the invention provides a power conversion device including a bypass switch connected in parallel to a frequency converter for AC-AC conversion including a converter for performing AC-DC conversion and a converter for performing DC-AC conversion. A control device of the frequency converter includes an AC current control unit that controls an AC current flowing to the frequency converter, a DC current control unit that controls a DC current flowing to the frequency converter, and a zero-phase current control unit that controls a zero-phase current flowing to the bypass switch. The zero-phase current control unit is operated when the bypass switch and the frequency converter are switched.

Further, the invention provides a variable-speed pumped-storage power generation system in which a variable-speed pumped-storage power generation motor performing pumping operation and power generation operation is connected to an AC side of the power conversion device. Advantageous Effects of Invention

According to the invention, when the operation mode is switched, the bypass switch can be opened after the current flowing to the bypass switch is reduced to substantially zero current, so that the operation mode can be switched seamlessly while contact portions and electrode wear due to switching of the current is suppressed when a zero-phase current is flowing.

Brief Description of Drawings

Fig. 1 is a diagram illustrating an example of the overall configuration of a variable-speed pumped-storage power generation system according to a first embodiment of the invention.

Fig. 2 is a diagram illustrating a specific configuration example of a conversion circuit 106 forming a frequency converter 104.

Fig. 3 is a diagram illustrating an example of a control block of a frequency converter control device 109.

Fig. 4 is a diagram illustrating an operation sequence of the variable-speed pumped-storage power generation system according to the first embodiment of the invention.

Fig. 5 is a diagram illustrating current waveforms of respective parts when a zero-phase current control of the invention is not introduced.

Fig. 6 is a diagram illustrating current waveforms of respective parts when the zero-phase current control of the invention is introduced.

Fig. 7 is a diagram illustrating an example of the overall configuration of a variable-speed pumped-storage power generation system according to a second embodiment of the invention.

Fig. 8 is a diagram illustrating a circuit configuration example of a self-excited converter according to a second embodiment of the invention.

Fig. 9 is a diagram illustrating another circuit configuration example of the self-excited converter according to the second embodiment of the invention.

Fig. 10 is a diagram illustrating still another circuit configuration example of the self-excited converter according to the second embodiment of the invention.

Fig. 11 is a diagram illustrating an example of the overall configuration of another variable-speed pumped-storage power generation system according to the second embodiment of the invention.

Fig. 12 is a diagram illustrating a circuit configuration example of another single-phase self-excited converter according to the second embodiment of the invention. Description of Embodiments

Hereinafter, embodiments of the invention will be described with reference to the accompanying drawings.

First Embodiment

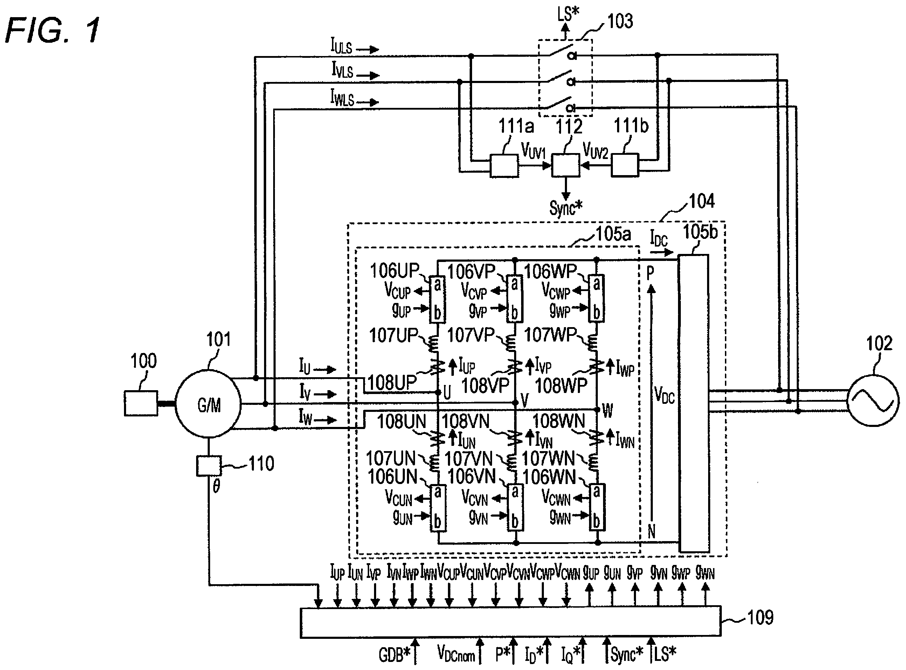

With reference to Fig. 1, an example of the overall configuration of a variable-speed pumped-storage power generation system according to the first embodiment of the invention will be described.

In the variable-speed pumped-storage power generation system of Fig. 1, a generator motor 101 connected to a water turbine 100 is connected to a power system 102 via a bypass switch 103 and a frequency converter 104 connected in parallel. The frequency converter 104 is controlled by a frequency converter control device 109.

The bypass switch 103 uses a breaker or a load switch, and closes the bypass switch 103 to bypass the frequency converter 104 when the generator motor 101 and the electric power system 102 are operating at a synchronous speed. Then, the bypass switch 103 checks the open/closed state of a main circuit and outputs an open/close signal LS* to the frequency converter control device 109. When LS* = 0, the state is "open", and when LS* = 1, the state is "closed".

The frequency converter 104 includes two self-excited converters 105a and 105b. By connecting between the DC terminals of the two self-excited converters 105a and 105b, a so-called DC circuit power conversion device is formed in which one self-excited converter converts AC to DC, and the other self-excited converter converts DC to AC. Thus, a frequency conversion function between the generator motor 101 and the power system 102 is realized.

The self-excited converters 105a and 105b are configured by a double-star modular multi-level converter (hereinafter, referred to as DS-MMC) as illustrated in Fig. 1 of the configuration example of the self-excited converter 105a on the generator motor 101 side. The DS-MMC is configured by six conversion circuits 106 (106UP, 106UN, 106VP, 106VN, 106WP, and 106WN) for the U, V, and W phases, a current limit reactor 107 (107UP, 107UN, 107VP, 107VN, 107WP, and 107WN), and a current detector 108 (108UP, 108UN, 108VP, 108VN, 108WP, and 108WN) for detecting an arm current (IUP, IUN, IVP, IVN, IWP, and IWN) of each phase. The self-excited converter 105b on the power system 102 side is similarly configured and is controlled in the same manner, thus the following description will be given of the self-excited converter 105a.

In such a star connection, an arm is configured by a series circuit of the conversion circuit 106 and the current limit reactor 107, and a leg is configured by connecting the upper and lower arms in series. The connection point of the upper and lower arms of three pairs of legs is used as each phase terminal of the three-phase AC, and the upper and lower ends of the three pairs of legs each are commonly connected to form DC positive/negative terminals.

The current limit reactor 107 (107UP, 107UN, 107VP, 107VN, 107WP, 107WN) used here is a reactor which has impedance for a zero-phase circuit in addition to the impedance of the positive-phase circuit and the negative-phase circuit in the three-phase symmetric circuit.

The current detector 108 (108UP, 108UN, 108VP, 108VN, 108WP, 108WN) is a current detector capable of detecting a zero-phase current in addition to detecting a positive-phase current and a negative-phase current.

In the six conversion circuits 106 of the U, V, and W phases, the output terminals (b) of 106UP, 106VP, and 106WP, and the output terminals (a) of 106UN, 106VN, and 106WN are connected to AC terminals U, V, and W, respectively, via the current limit reactors 107 (107UP, 107UN, 107VP, 107VN, 107WP, 107WN). In the six conversion circuits 106 of the U, V, and W phases, the output terminals (a) of 106UP, 106VP, and 106WP, and the output terminals (b) of 106UN, 106VN, and 106WN are connected to DC terminals P and N of the DC circuit, and connected to the self-excited converter 105b of the other terminal via the DC circuit.

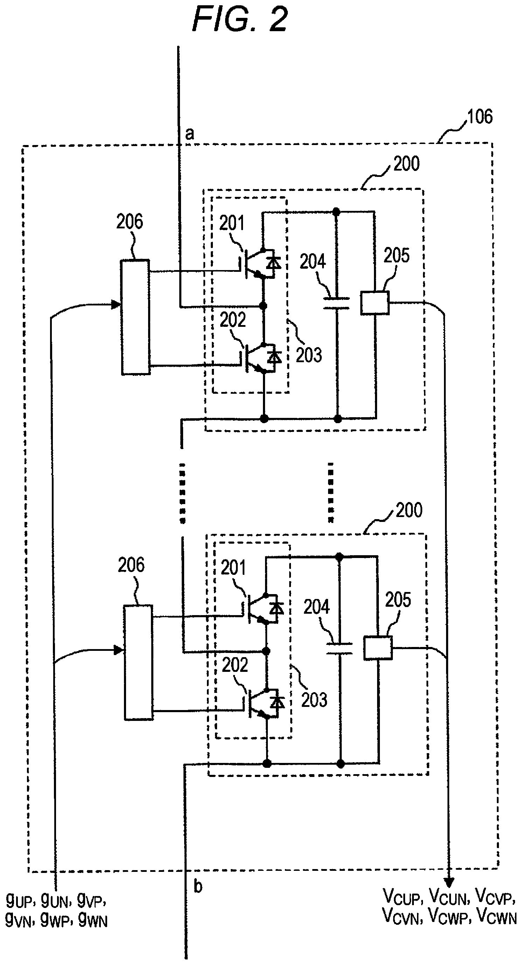

The frequency converter control device 109 receives the arm currents IUP, IUN, IVP, IVN, IWP, and IWN detected by the current detectors 108 (108UP, 108UN, 108VP, 108VN, 108WP, 108WN). Also, as will be described later with reference to Fig. 2, the DC capacitor voltages VCUP, VCUN, VCVP, VCVN, VCWP, and VCWN detected by the DC voltage detector in a unit converter are input. Further, a rotational phase θ of the generator motor 101 detected by a phase detector 110, the gate deblocking command GDB* of the frequency converter 104, a DC voltage reference value VDCnom, an effective power command P*, and dq-axis AC current commands ID* and IQ*, and a synchronization verifier signal Sync* are input.

By the calculation based on these inputs, the frequency converter control device 109 outputs gate commands gUP, gUN, gVP, gVN, gWP, and gWN which are given to unit converters of the respective conversion circuits 106 (106UP, 106UN, 106VP, 106VN, 106WP, and 106WN).

In Fig. 1, the AC voltage detectors 111a and 111b detect UV line voltages VUV1 and VUV2 of both terminals of the bypass switch 103, and output the detected voltages to a synchronization verifier 112. The synchronization verifier 112 determines whether the two terminals of the bypass switch 103 are synchronous or asynchronous based on the voltage amplitude, phase, and frequency, and outputs the synchronization verifier signal Sync* to the frequency converter control device 109. If Sync* = 0, asynchronous speed operation (voltage amplitude, phase, and frequency at both ends of bypass switch 103 do not match) . If Sync* = 1, synchronous speed operation (voltage amplitude, phase, and frequency at both ends of bypass switch 103 match).

Fig. 2 illustrates a specific configuration example of the conversion circuit 106 forming the frequency converter 104 . The conversion circuit 106 is configured by a circuit in which a plurality of unit converters 200 are connected in series, and uses a bidirectional chopper circuit as the unit converter.

The unit converter 200 is configured such that a switching circuit 203 in which two switching elements 201 and 202 connected with a freewheeling diode is connected in parallel, a DC capacitor 204 as an energy buffer, and a DC voltage detector 205, which are connected in parallel. Terminals a and b in Fig. 2 are output terminals of the conversion circuit 106 and correspond to Fig. 1.

The DC voltage detector 205 detects terminal voltages VCUP, VCUN, VCVP, VCVN, VCWP, and VCWN of the DC capacitor 204 and transmits the detected voltages to the frequency converter control device 109.

A gate drive circuit 206 receives a gate command g (gUP, gUN, gVP, gVN, gWP, and gWN) transmitted from the frequency converter control device 109 to the unit converter 200 of each arm. The gate drive circuit 206 generates a gate drive signal for turning on/off each of the switching elements 201 and 202 in accordance with the gate command g, and supplies the gate drive signal to each of the switching elements 201 and 202.

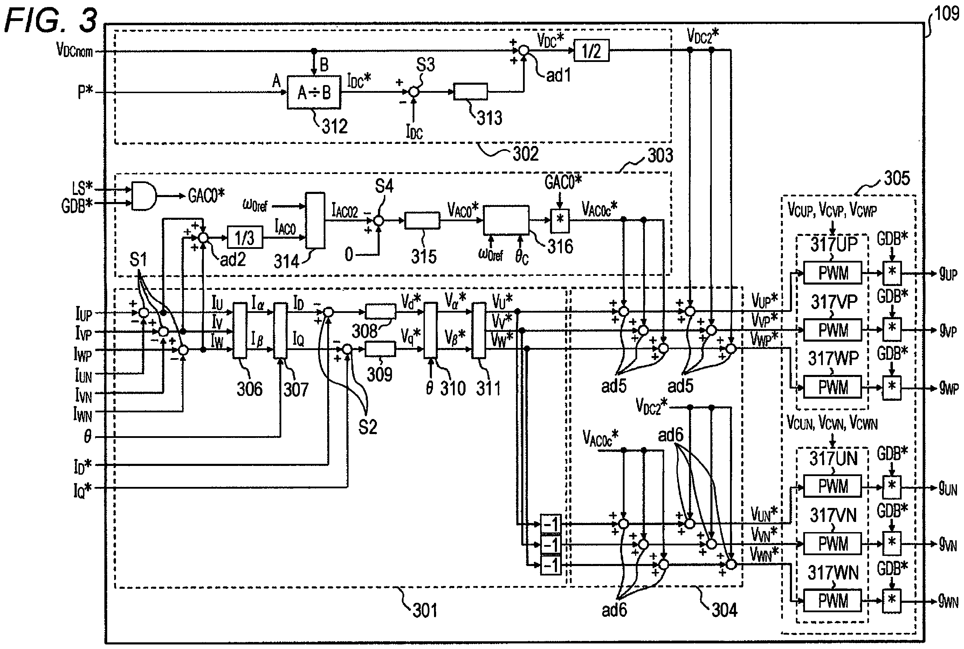

With reference to Fig. 3, a diagram of a control block example of the frequency converter control device 109 will be described. The frequency converter control device 109 includes an AC current control unit 301, a DC current control unit 302, a zero-phase current control unit 303, a command value addition unit 304, and a gate signal generation unit 305. Although the example of Fig. 3 illustrates the frequency converter control device 109 for the self-excited converter 105a, a similar device is separately provided for the self-excited converter 105b. In the invention, the zero-phase current control unit 303 is newly added.

Among them, the AC current control unit 301 is a control unit which controls the AC currents IU, IV, and IW flowing through the self-excited converter 105a to follow the AC current command value (dq-axis AC current commands ID* and IQ*) in the example of Fig. 3. According to this circuit configuration, the arm currents IUP, IUN, IVP, IVN, IWP, and IWN detected by the current detectors 108 (108UP, 108UN, 108VP, 108VN, 108WP, and 108WN) of the conversion circuits 106 (106UP, 106UN, 106VP, 106VN, 106WP, and 106WN) of each phase become AC currents IU, IV, and IW for each phase by obtaining a difference current in a subtractor S1 for each phase. That is, the AC currents IU, IV, and IW can be obtained from Equations (1) to (3).

[Math. 1]

$$IU = IUP - IUN \qquad \cdots (1)$$

[Math. 2]

$$IV = IVP - IVN \qquad \cdots (2)$$

[Math. 3]

$$IW = IWP - IWN \qquad \cdots (3)$$

Next, the AC currents IU, IV, and IW flowing through the self-excited converter 105a calculated by Equations (1) to (3) are converted into an $\alpha$-axis current I$\alpha$, a $\beta$-axis current I$\beta$ by an $\alpha\beta$-axis coordinate conversion unit 306. The $\alpha\beta$ conversion operation can be indicated by Equation (4). Further, $\sqrt{(2/3)}$ in Equation (4) is a coefficient of the absolute conversion.

[Math. 4]

$$\begin{bmatrix} I\alpha \\ I\beta \end{bmatrix} = \sqrt{\frac{2}{3}} \begin{bmatrix} 1 & -1/2 & -1/2 \\ 0 & \sqrt{3/2} & -\sqrt{3/2} \end{bmatrix} \begin{bmatrix} IU \\ IV \\ IW \end{bmatrix} \qquad \cdots (4)$$

The $\alpha$-axis current I$\alpha$ and the $\beta$-axis current I$\beta$ of the $\alpha\beta$-axis coordinate conversion unit 306 and the rotational phase $\theta$ of the generator motor 101 detected by the phase detector 110 are converted into a d-axis current ID and a q-axis current IQ by a dq-axis coordinate conversion unit 307. The dq conversion operation can be indicated by Equation (5).

[Math. 5]

$$\begin{bmatrix} ID \\ IQ \end{bmatrix} = \begin{bmatrix} \cos\theta & \sin\theta \\ -\sin\theta & \cos\theta \end{bmatrix} \begin{bmatrix} I\alpha \\ I\beta \end{bmatrix} \qquad \cdots (5)$$

Here, ID indicates an effective current flowing between the self-excited converter 105a and the generator motor 101, and IQ indicates a reactive current flowing between the self-excited converter 105a and the generator motor 101.

The d-axis current command ID* and the q-axis current command IQ* given from outside the frequency converter control device 109, and the effective current ID and the reactive current IQ output from the dq-axis coordinate conversion unit 307 are respectively supplied to a subtractor S2. A current deviation is output to AC current controllers 308 and 309. The AC current controllers 308 and 309 are configured by proportional-integral controllers, and calculate a d-axis voltage command value VD* and a q-axis voltage command value VQ* so that the current deviation calculated by the subtractor approaches zero.

The d-axis voltage command values VD* and the q-axis voltage command values VQ* obtained by the AC current controllers 308 and 309 are converted into an α-axis voltage commands Vα* and a β-axis voltage commands Vβ* by an inverse dq-axis coordinate conversion unit 310. The inverse dq transform operation can be indicated by Equation (6).
[Math. 6]

$$\begin{bmatrix} V\alpha* \\ V\beta* \end{bmatrix} = \begin{bmatrix} \cos\theta & -\sin\theta \\ \sin\theta & \cos\theta \end{bmatrix} \begin{bmatrix} VD* \\ VQ* \end{bmatrix} \qquad \cdots (6)$$

The α-axis voltage command Vα* and the β-axis voltage command vβ* of the inverse dq-axis coordinate conversion unit 310 are converted into AC voltage commands VU*, VV*, and VW* by the inverse αβ-axis coordinate conversion unit 311. The inverse αβ conversion operation can be indicated by Equation (7). √(2/3) in Equation (7) is a coefficient of the absolute conversion.
[Math. 7]

$$\begin{bmatrix} VU* \\ VV* \\ VW* \end{bmatrix} = \sqrt{\frac{2}{3}} \begin{bmatrix} 1 & 0 \\ -1/2 & \sqrt{3}/2 \\ -1/2 & -\sqrt{3}/2 \end{bmatrix} \begin{bmatrix} V\alpha* \\ V\beta* \end{bmatrix} \qquad \cdots (7)$$

Here, the above-described control in the AC current control unit 301 is the same as the control of a positive-phase current I1 and a negative-phase current 12 in the three-phase symmetric circuit. However, this control cannot control the zero-phase current I0 in the three-phase symmetric circuit. Therefore, in the invention, a function of the zero-phase current control unit 303 described later is additionally provided.

Next, the DC current control unit 302 is a control unit that causes a DC current IDC flowing between the two self-excited converters 105a and 105b to follow a DC current command value IDC*. The DC current IDC can be calculated from the arm current of each arm, and can be obtained by Equation (8) .
[Math. 8]

$$IDC = \frac{1}{2}\left(IUP + IUN + IVP + IVN + IWP + IWN\right) \qquad \cdots (8)$$

On the other hand, the DC current command value IDC* can be obtained by dividing the DC voltage reference value VDCnom by a divider 312 from the effective power command P* given from outside the frequency converter control device 109. The DC current command value IDC* and the DC current IDC are output to a subtractor S3, and a current deviation is output to a DC current controller 313. The DC current controller 313 is configured by a proportional-integral controller, and calculates a voltage command value so that the current deviation calculated by the subtractor S3 approaches zero. The voltage command value is added to the DC voltage reference value VDCnom by an adder ad1 and calculates a DC voltage command VDC*.

The DC voltage command VDC* is a DC voltage command value between DC terminals P and N. Therefore, if VDC* is applied to the P-side arm and N-side arm by 1/2, the DC voltage VDC that follows VDC* is output at DC terminals P and N, so VDC* is multiplied by 1/2 to generates DC voltage command value VDC2* of the P-side arm and N-side arm.

Next, the zero-phase current control unit 303 provided according to the invention is a control unit for causing a zero-phase current IAC0 flowing through the bypass switch 103 to follow the zero-phase current command value. The zero-phase current IAC0 can be obtained by Equation (9) using the AC currents IU, IV, and IW. Equation (9) is executed by an adder ad2.

[Math. 9]

$$IAC\,0 = \frac{1}{3}\left(IU + IV + IW\right) \qquad \cdots (9)$$

The zero-phase current suppressed by the invention is a zero-phase current component of a specific frequency generated by the influence of a dead time of a self-excited converter used as a frequency converter. Therefore, a specific frequency extraction unit 314 detects only a specific frequency component of the zero-phase current IAC0. Fourier series expansion is used to extract a specific frequency component f0ref. Amplitudes IAC0a and IAC0b obtained when the specific frequency f0ref is decomposed into a cosine wave signal and a sine wave signal can be obtained by Equations (10) and (11). Here, $\omega 0ref$ is the angular frequency of the specific frequency f0ref, and T0ref is the cycle of the specific frequency f0ref.

[Math. 10]

$$IAC\,0\,a = \frac{2}{T_{0\,ref}}\int_{-\frac{T_{0\,ref}}{2}}^{\frac{T_{0\,ref}}{2}}\left(IAC\,0 \times c\ o\ s\ \omega_{0\,ref}t\right)dt \qquad \cdots (10)$$

[Math. 11]

$$IAC\,0\,b = \frac{2}{T_{0\,ref}}\int_{-\frac{T_{0\,ref}}{2}}^{\frac{T_{0\,ref}}{2}}\left(IAC\,0 \times s\ i\ n\ \omega_{0\,ref}t\right)dt \qquad \cdots (11)$$

Since the amplitudes IAC0a and IAC0b in the Equations (10) and (11) are the amplitudes when the signals are separated into the cosine wave signal and the sine wave signal, the amplitude IAC02 obtained by combining them can be expressed by Equation (12). The amplitude IAC02 is obtained by the specific frequency extraction unit 314.

[Math. 12]

$$IAC\,0\,2 = \sqrt{IAC\,0\,a^2 + IAC\,0\,b^2} \qquad \cdots (12)$$

The amplitude IAC02 is output to a subtractor S4, and the current deviation from the zero-phase current command value = 0 is output to a zero-phase current controller 315. The zero-phase current controller 315 is configured by a proportional-integral controller, and calculates a zero-phase voltage command VAC0* so that the current deviation calculated by the subtractor S4 approaches zero.

VAC0* of the zero-phase current controller 315 generates an AC voltage command VAC0c* by an AC waveform generation unit 316. The AC waveform can be obtained by Equation (13).

[Math. 13]

$$VAC\,0\,c* = VAC\,0 *\times s\ i\ n\left(\omega_{0\,ref}t + \theta_c\right) \qquad \cdots (13)$$

In Equation (13), $\theta c$ is a phase delay compensation amount. The control symmetry of the zero-phase current control is dominated by a reactance component. Since an input IAC02 of the zero-phase current control is a value calculated from the detected zero-phase current IAC0, a zero-phase current correction value flowing at the correction voltage output is delayed by about 90 degrees in principle. That is, θc is introduced to improve the stability of the control system, and compensates for the phase delay that occurs in principle in the correction voltage.

The zero-phase voltage command VAC0c* is controlled by a zero-phase current output command GAC0*. When GAC0* = 0, the output is stopped, and when GAC0* = 1, the output is output. The zero-phase current output command GAC0* is given as a logical product of gate deblocking command GDB* given from the outside frequency converter control device 109 and the bypass switch opening/closing signal LS*.

In the circuit configuration of Fig. 3, the command value addition unit 304 adds the AC voltage command values VU*, VV*, VW*, the DC voltage command value VDC2*, and the zero-phase voltage command value VAC0c* by adders ad5 and ad6 for each of the arms 106UP, 106UN, 106VP, 106VN, 106WP and 106WN, and generates arm voltage command values VUP*, VUN*, VVP*, VVN*, VWP* and VWN*.

The gate signal generation unit 305 performs PWM calculation in PWM calculators 317UP, 317UN, 317VP, 317VN, 317WP, and 317WN using the arm voltage command values VUP*, VUN*, VVP*, VVN*, VWP*, and VWN*, which are outputs of the command value addition unit 304, and the DC capacitor voltages VCUP, VCUN, VCVP, VCVN, VCWP, and VCWN, thereby generating the gate commands g (gUP, gUN, gVP, gVN, gWP, gUP, gUN, gUN, gVP, gVN, and gWN) to be given to the unit converter of the arms. The gate commands g (gUP, gUN, gVP, gVN, gWP, and gWN) are controlled by the gate deblocking command GDB* given from outside the frequency converter control device 109. When GDB* = 0, the gate command output is stopped (gate block), and when GDB* = 1, the gate command is output (gate deblock).

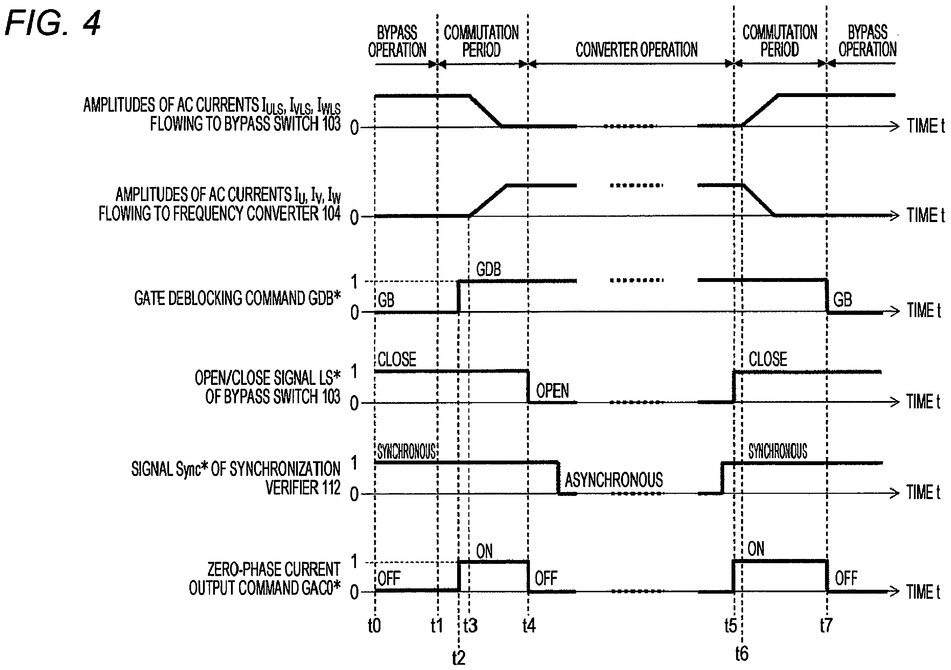

With reference to Fig. 4, an operation sequence of the variable-speed pumped-storage power generation system according to the first embodiment of the invention will be described.

Fig. 4 illustrates a series of time-series operations in the power conversion device in which the bypass switch 103 and the frequency converter 104 are connected in parallel, in which the bypass operation for energizing the bypass switch 103 shifts to the converter operation for energizing the frequency converter 104, and the operation returns to the bypass operation for energizing the bypass switch 103.

In Fig. 4, the horizontal axis represents time, and the vertical axis represents, from above, the amplitude value of the AC current flowing to the bypass switch 103, the amplitude value of the AC current flowing to the frequency converter 104, the gate deblocking command GDB*, and the open/close signal LS* of the bypass switch 103, the synchronization verifier signal Sync*, and the zero-phase current output command GAC0* of the zero-phase current control unit 303.

First, a method for continuously commutating the load current flowing in the bypass switch 103 to the frequency converter 104 using the period from to to t4 in Fig. 4 will be described.

At time t0 in Fig. 4, the open/close signal LS* of the bypass switch 103 = 1 ("closed" state of the bypass switch 103), and the gate command outputs of the self-excited converters 105a and 105b are stopped (GDB* = 0), and the load current is flowing through the bypass switch 103. This operation condition is referred to as a bypass operation. In the bypass operation, the generator motor 101 and the electric power system 102 are directly connected via the bypass switch 103, and the generator motor 101 and the electric power system 102 are in synchronous speed operation.

At time t1, a transition is made to a commutation period in which the load current is continuously commutated from the bypass switch 103 to the frequency converter 104. The time t1 is assumed to be instructed by a device, which is not illustrated, (for example, in the case of a variable-speed pumped-storage power generation system, a control device that controls starting and stopping of a pumping operation, a power generation operation, and a control switching).

In the commutation period, first, at time t2, the gate deblocking command GDB* of the self-excited converters 105a and 105b is switched from 0 to 1 to perform gate deblocking. Simultaneously with the gate deblocking, the zero-phase current output command GAC0* switches from 0 to 1, and the zero-phase current control unit 303 outputs the AC voltage command VAC0c* .

At time t3, commutation of the load current from the bypass switch 103 to the frequency converter 104 is continuously started.

After the load current is commutated from the bypass switch 103 to the frequency converter 104, the bypass switch 103 is switched from closed to open at time t4. In this transient situation, the zero-phase current control unit 303 operates to suppress the zero-phase current flowing through the bypass switch 103. Also, by continuously commutating the load current from the bypass switch 103 to the frequency converter 104, it is possible to switch the bypass switch 103 from closed to open after the current is reduced to substantially zero. After opening the bypass switch 103 (LS* = 0), the zero-phase current path formed between the bypass switch 103 and the frequency converter 104 is disconnected, the zero-phase current output command GAC0* switches from 1 to 0, and the output of the zero-phase current control unit 303 is stopped.

Next, a method for continuously commutating the load current flowing in the frequency converter 104 to the bypass switch 103 using t5 to t7 in Fig. 4 will be described.

In the period from time t4 to time t5 in Fig. 4, the open/close signal LS* of the bypass switch 103 is 0 ("open" state of the bypass switch 103), and the gate command of the self-excited converters 105a and 105b are output (GDB* = 1), and the load current is flowing to the frequency converter 104. This condition is called a converter operation. In the converter operation, the generator motor 101 and the power system 102 are connected via the frequency converter 104, and are often operated at an asynchronous speed. Although the generator motor 101 and the power system 102 operate asynchronously, both powers can be interchanged when the frequency converter 104 operates at a variable speed. Before time t5, the output of the frequency converter is changed so that the synchronization verifier signal Sync* = 1 (synchronous operation).

At time t5, a transition is made to a commutation period in which the load current is continuously commutated from frequency converter 104 to the bypass switch 103. It is assumed that the time t5 is also separately instructed by a device (not illustrated). By setting the synchronization verifier signal Sync* = 1 (synchronous operation) by time t5, the bypass switch 103 can be switched from open to closed. After the bypass switch 103 is closed (the open/close signal LS* of the bypass switch 103 = 1), a zero-phase current path is formed between the bypass switch 103 and the frequency converter 104, the zero-phase current output command GAC0* changes from 0 to 1, and the output of the zero-phase current control unit 303 is restarted. Even in this transient situation, the zero-phase current control unit 303 operates to suppress the zero-phase current flowing to the bypass switch 103.

At time t6, commutation of the load current from frequency converter 104 to bypass switch 103 starts. At time t7, the gate deblocking command GDB* of the self-excited converters 105a and 105b is switched from 1 to 0 to block the gate and shift to a bypass operation period. Since the self-excited converters 105a and 105b gate-block, the zero-phase current output command GAC0* switches from 1 to 0, and the output of the zero-phase current control unit 303 also stops.

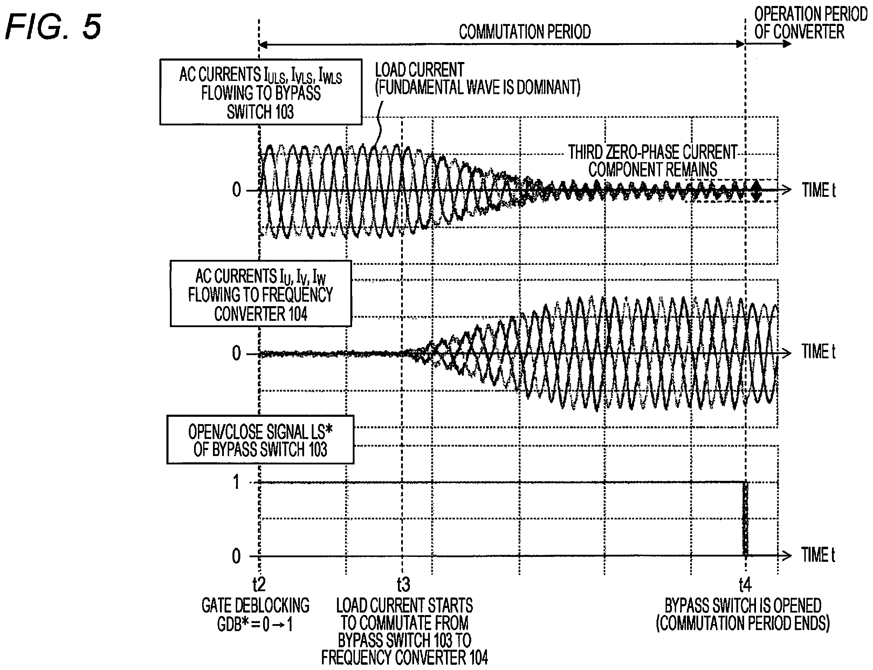

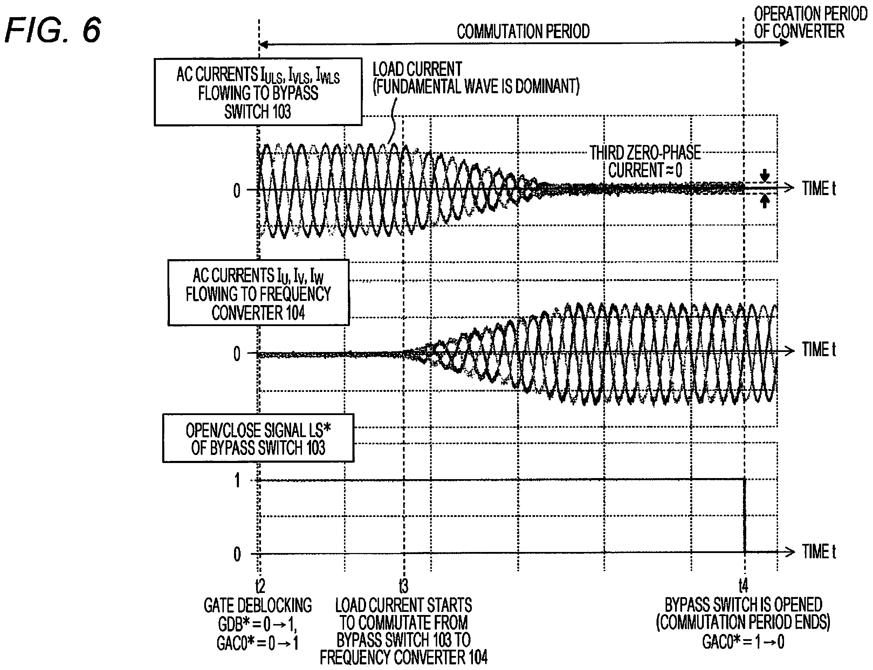

Next, a waveform example when the zero-phase current control unit 303 of the invention is not applied will be illustrated with reference to Fig. 5. A waveform example when the zero-phase current control unit 303 of the invention is applied will be illustrated with reference to Fig. 6. Figs. 5 and 6 illustrate a commutation period (a period from t2 to t4) in which the load current flowing in the bypass switch 103 in Fig. 4 is continuously commutated to the frequency converter 104.

Figs. 5 and 6 illustrate, from the top, AC currents IULS, IVLS, and IWLS flowing to the bypass switch 103, AC currents IU, IV, and IW flowing to the frequency converter 104, and the open/close signal LS* of the bypass switch 103.

First, Fig. 5 illustrates an example in which the zero-phase current control unit 303 is not applied. At time t2, the gate deblocking command GDB* of the self-excited converters 105a and 105b is switched from 0 to 1 to perform gate deblocking. At time t3, the load current from the bypass switch 103 to the frequency converter 104 continuously commutates. However, a third harmonic current that is not a load current remains in the AC currents IULS, IVLS, and IWLS flowing to the bypass switch 103. The third harmonic current is a zero-phase current component since the phases are equal in the U, V, and W phases, and is a current component generated due to the influence of a dead time of the self-excited converter used as a frequency converter.

With the third zero-phase current remaining, the bypass switch is switched from closed to open at time t4, and the commutation period ends. If the switching operation is frequently performed in a state where the zero-phase current flows to the bypass switch, there is a problem that the contact portions of the load switch used as the bypass switch and the electrodes are worn and the replacement cycle is shortened. Therefore, it is desirable that the opening/closing operation can be performed after the current flowing to the bypass switch is made substantially zero from the viewpoint of extending the life span of the bypass switch and improving the reliability.

Next, Fig. 6 illustrates an example in which the zero-phase current control unit 303 is applied. At time t2, GDB* of self-excited converters 105a and 105b is switched from 0 to 1 to perform gate deblocking. Simultaneously with the gate deblocking, the zero-phase current output command GAC0* switches from 0 to 1, and the zero-phase current control unit 303 outputs the AC voltage command VAC0c*. With this configuration, the zero-phase current IAC0 flowing between the bypass switch 103 and the frequency converter 104 is controlled to substantially zero. At time t3, the load current from the bypass switch 103 to the frequency converter 104 continuously commutates. Fig. 6 illustrates that the generation of the third zero-phase current flowing in Fig. 5 is suppressed, and the current flowing to the bypass switch can be suppressed to substantially zero.

With the third zero-phase current substantially at zero, the bypass switch is switched from closed to open at time t4, and the commutation period ends.

The above-described operation has illustrated that the bypass switch 103 can be opened and closed after the zero-phase current flowing to the bypass switch 103 during the commutation period is reduced to substantially zero. According to this embodiment, it is possible to simultaneously prevent the contact portion and the electrode from being worn by switching of the current when the zero-phase current is flowing, and seamlessly switch the operation mode.

[Second Embodiment]

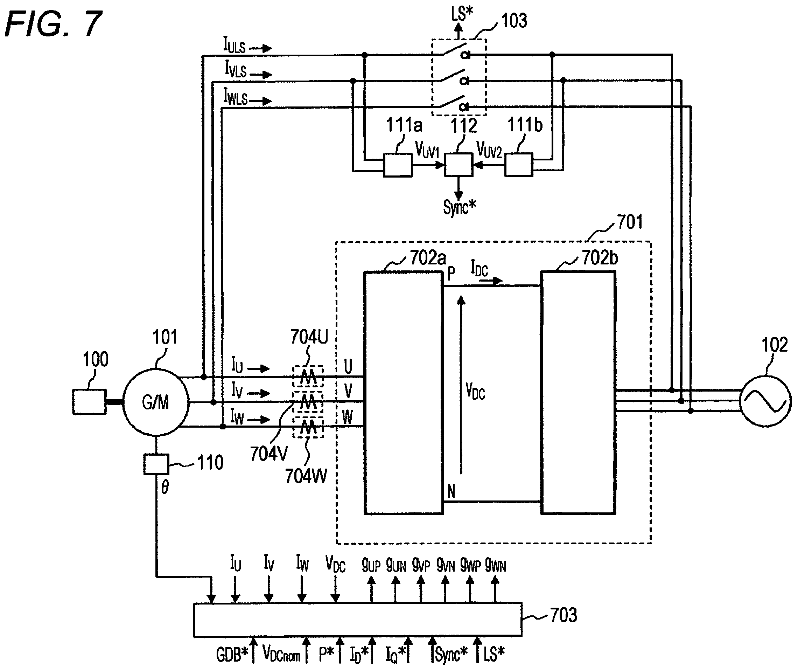

With reference to Fig. 7, an overall configuration of a variable-speed pumped-storage power generation system according to a second embodiment of the invention will be described. The figure numbers that are the same as those in Fig. 1 have the same meaning, and the description thereof is omitted.

A frequency converter 701 includes two self-excited converters 702a and 702b. The second embodiment is different from the first embodiment in that a function 108 corresponding to the current detector in Fig. 1 is arranged outside the AC terminals U, V, and W.

A frequency converter control device 703 receives the AC currents IU, IV, and IW detected by current detectors 704U, 704V, and 704W, the DC voltage VDC, the rotational phase θ of the generator motor 101 detected by the phase detector 110, the gate deblocking command GDB* of the frequency converter 701, the DC voltage reference value VDCnom, the effective power command P*, and the dq-axis AC current commands ID* and IQ*, and outputs the gate commands gUP, gUN, gVP, gVN, gWP, and gWN given to the switching elements. The current detectors 704U, 704V, and 704W are current detectors that can detect a zero-phase current in addition to detecting a positive-phase current and a negative-phase current.

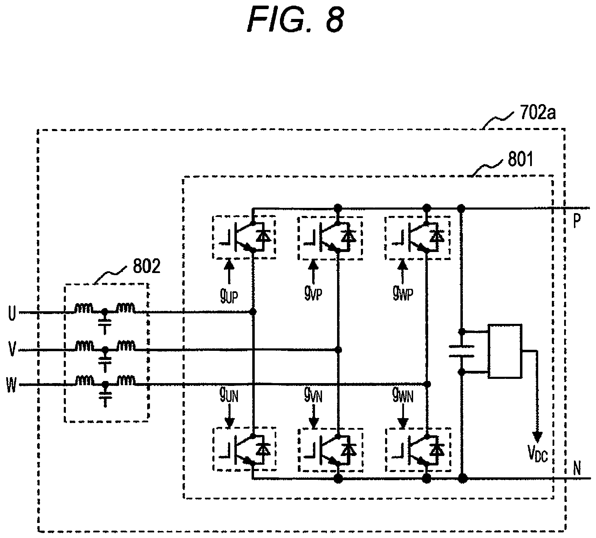

With reference to Fig. 8, a circuit configuration example of the self-excited converter 702a according to the second embodiment of the invention will be described. The self-excited converter 702a includes a two-level converter 801 and a harmonic filter circuit 802. The harmonic filter circuit 802 is connected to suppress a harmonic current output from the two-level converter 801. The filter reactor of the harmonic filter circuit 802 has inductance for the zero-phase circuit in addition to the inductance for the positive-phase circuit and the negative-phase circuit.

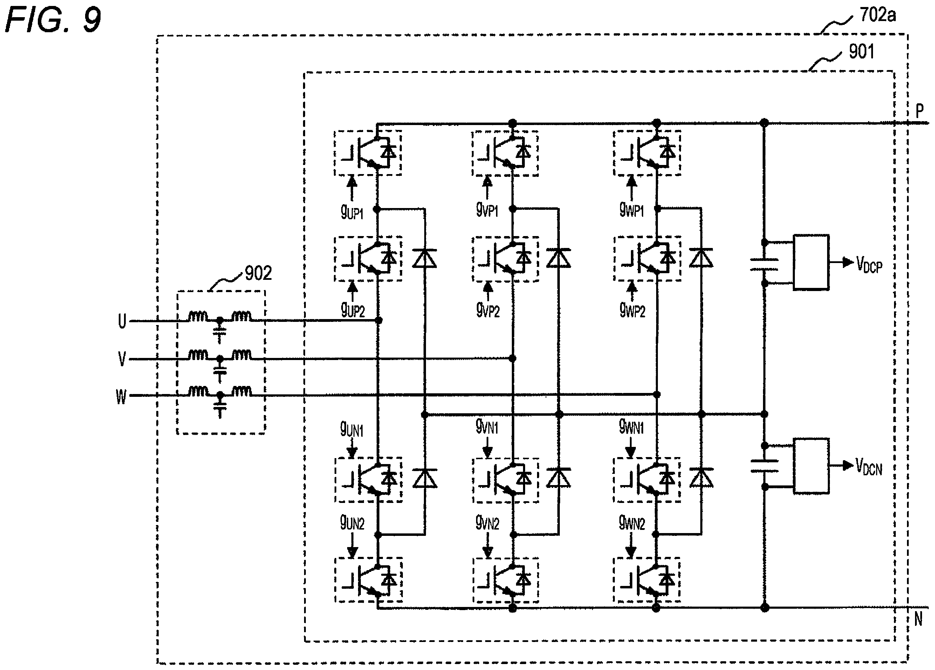

With reference to Fig. 9, another circuit configuration example of the self-excited converter 702a according to the second embodiment of the invention will be described. The self-excited converter 702a in Fig. 9 includes a neutral point clamped three-level converter 901 and a harmonic filter circuit 902. The harmonic filter circuit 902 is connected to suppress the harmonic current output from the three-level converter 901. The filter reactor of the harmonic filter circuit 902 has an inductance for the zero-phase circuit in addition to the inductance for the positive-phase circuit and the negative-phase circuit.

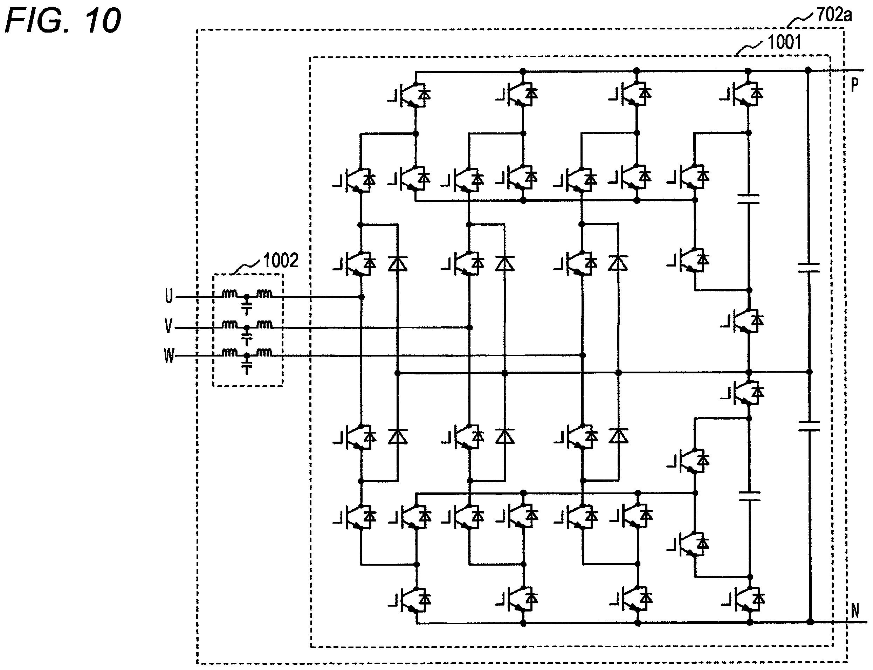

With reference to Fig. 10, a description will be given of still another circuit configuration example of the self-excited converter 702a illustrating of the second embodiment of the invention. The self-excited converter 702a is configured by a five-level converter 1001 and a harmonic filter circuit 1002 which is disclosed in the literature (Isuzu Hasegawa, Shizunori Hamada, Kenji Kobori, Yutaka Shoji: "Development of Transformerless Multi-Level High-Voltage Inverter", Meiden, Vol. 352, 2016, No. 3, pp. 34 to 39). The harmonic filter circuit 1002 is connected to suppress the harmonic current output from the five-level converter 1001. The filter reactor of the harmonic filter circuit 1002 has an inductance for the zero-phase circuit in addition to the inductance for the positive-phase circuit and the negative-phase circuit.

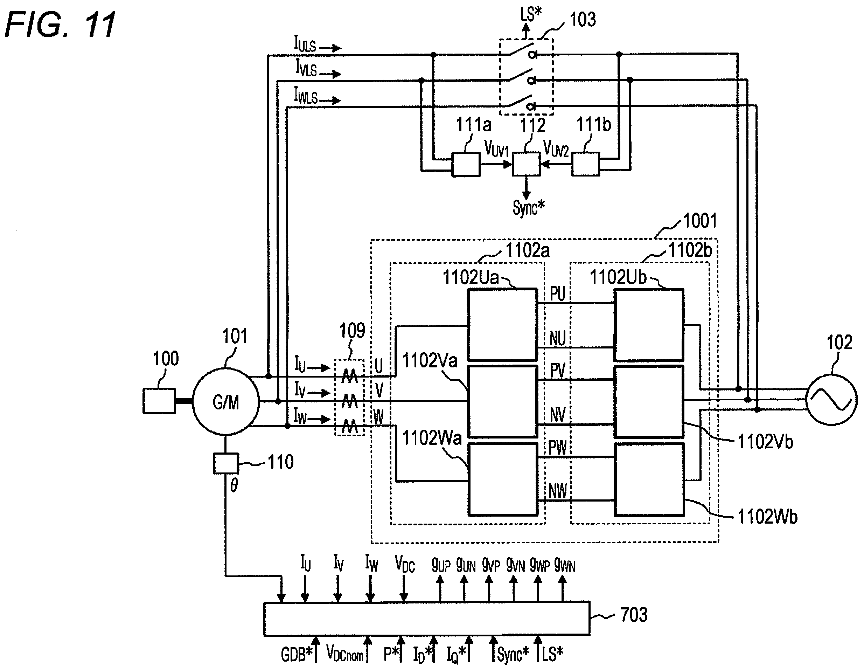

With reference to Fig. 11, an overall configuration of another variable-speed pumped-storage power generation system according to the second embodiment of the invention will be described. The figure numbers that are the same as those in Figs. 1 and 7 have the same meaning, and the description thereof is omitted. The frequency converter 1101 includes two single-phase self-excited converters 1102a and 1102b. The single-phase self-excited converters 1102a and 1102b include single-phase self-excited converters 1102Ua, 1102Va, 1102Wa, 1102Ub, 1102Vb, and 1102Wb, respectively.

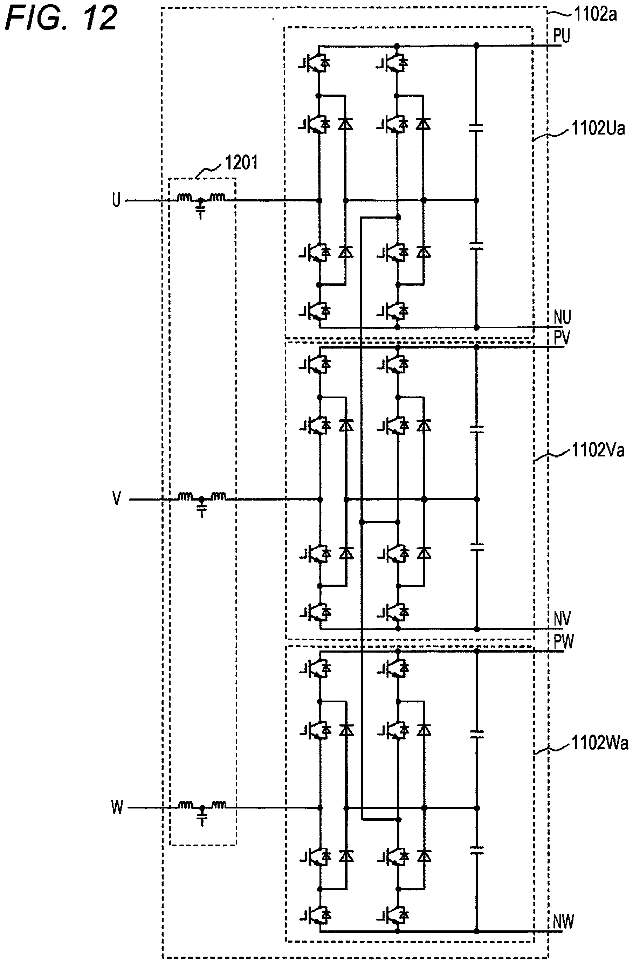

With reference to Fig. 12, a circuit configuration of another single-phase self-excited converter 1102a according to the second embodiment of the invention will be described. The single-phase self-excited converter 1102a is configured by single-phase self-excited converters 1102Ua, 1102Va, and 1102Wa configured by a 5-level converter and a harmonic filter circuit 1201 which is disclosed in the literature (M.A Mamun, M. Tsukakoshi, K. Hashimura, H. Hosoda, S.C. Peak: "Innovation of a large capacity five-level IGBT inverter for Oil and Gas Industry", 2011 IEEE Energy Conversion Congress and Exposition, 2011, pp. 1964 to 1971). The harmonic filter circuit 1201 is connected to suppress the harmonic currents output from the single-phase self-excited converters 1102Ua, 1102Va, and 1102Wa. The filter reactor of the harmonic filter circuit 1201 has an inductance for the zero-phase circuit in addition to the inductance for the positive-phase circuit and the negative-phase circuit.

As described above, in the second embodiment, the zero-phase current is detected by the current detectors 704U, 704V, and 704W, and the zero-phase current IAC0 flowing during the commutation period is suppressed by the zero-phase current control unit with the configuration that the filter reactor of the harmonic filter has the zero-phase inductance.

According to the second embodiment, by arranging the current detector on the AC side, the number of current detectors can be reduced from six to three as compared with the first embodiment. In the two-level converter, the three-level converter, and the five-level converter, when the carrier frequency is the same, the harmonic current flows out much more than in the multi-level converter. Therefore, a harmonic filter is connected to the AC side. Therefore, in the second embodiment, the current limit reactor required in the first embodiment can be reduced by adding an inductance for the zero-phase circuit to the harmonic filter.

Each of the power conversion devices having the circuit configurations of the first and second embodiments has an energy buffer (capacitor) in a DC circuit, and the degree of failure due to a transient current caused by accumulated energy tends to be excessively large.

According to the invention described in detail above, even if the main circuit configuration of the power conversion device is different, the failure due to the zero-phase current generated during the switching of the bypass switch 103 and the frequency converter 104 (the life span of the bypass switch, and reliability degradation) can be improved and eliminated.

## Claims

1.  A power conversion device comprising a bypass switch connected in parallel to a frequency converter for performing AC-AC conversion including a converter for performing AC-DC conversion and a converter for performing DC-AC conversion,

    wherein a control device of the frequency converter includes an AC current control unit (301) that controls an AC current flowing to the frequency converter, a DC current control unit (302) that controls a DC current flowing to the frequency converter, and a zero-phase current control unit (303) that controls a zero-phase current flowing to the bypass switch, and

    the zero-phase current control unit (303) is operated when the bypass switch and the frequency converter are switched.

2.  The power conversion device according to claim 1, wherein, in the converter, an arm is configured by a series circuit of a conversion circuit and a current limit reactor, and a leg is configured by connecting upper and lower arms in series, a connection point of the upper and lower arms of three pairs of legs is used as each phase terminal of a three-phase AC, and upper and lower ends of the three pairs of legs each are commonly connected to form DC positive/negative terminals.

3.  The power conversion device according to claim 2, wherein the conversion circuit includes a capacitor (204) connected in parallel to a conversion element.

4.  The power conversion device according to claim 2 or 3, wherein the zero-phase current or the AC current is obtained from a current measured by a current detector provided in the arm.

5.  The power conversion device according to claim 1, wherein the AC is a three-phase AC, and the zero-phase current or the AC current is obtained from a current measured by a current detector provided in each phase of the three-phase AC.

6.  The power conversion device according to claim 5, wherein, in the converter, an arm is configured by a conversion circuit, and a leg is configured by connecting upper and lower arms in series, a connection point of the upper and lower arms of three pairs of legs is used as each phase terminal of a three-phase AC, upper and lower ends of the three pairs of legs each are commonly connected to form DC positive/negative terminals, and a harmonic filter circuit (802, 902, 1002, 1201) is provided for each phase of three-phase AC.

7.  The power conversion device according to claim 5, wherein the converter is configured by a neutral point clamped three-level converter (901) and includes a harmonic filter circuit (802, 902, 1002, 1201) for each phase of three-phase AC.

8.  The power conversion device according to claim 5, wherein the converter includes a five-level converter (1001) and includes a harmonic filter circuit (802, 902, 1002, 1201) for each phase of three-phase AC.

9.  The power conversion device according to claim 5, wherein the frequency converter includes a converter for performing AC-DC conversion and a converter for performing DC-AC conversion in each phase of three-phase AC, and performs AC-AC conversion for each phase.

10. The power conversion device according to any one of claims 1 to 9, wherein the DC current control unit (302) controls a positive-phase current and a negative-phase current.

11. The power conversion device according to any one of claims 1 to 10, wherein the zero-phase current control unit (303) detects an amplitude value of a specific frequency component of the zero-phase current using Fourier series expansion, and performs control in a direction in which a deviation between the amplitude value and a zero-phase current command value is eliminated.

12. The power conversion device according to any one of claims 1 to 11, wherein the zero-phase current control unit (303) determines output start and output stop based on a logical product of an open/close signal indicating an open/close state of the bypass switch and a gate output signal of the converter.

13. The power conversion device according to any one of claims 1 to 12, wherein the zero-phase current control unit (303) has a function of compensating for a phase delay of an output.

14. A variable-speed pumped-storage power generation system, wherein a variable-speed pumped-storage power generation motor that performs pumping operation and power generation operation is connected to an AC side of the power conversion device according to any one of claims 1 to 13.

15. The variable-speed pumped-storage power generation system according to claim 14, the system comprising:
a current detector (108, 704U, 704V, 704W) that detects a zero-phase current flowing to the bypass switch and a reactor (107) that has zero-phase impedance on a path of the bypass switch and the frequency converter.

*FIG. 1*

# FIG. 2

$g_{UP}$, $g_{UN}$, $g_{VP}$, $g_{VN}$, $g_{WP}$, $g_{WN}$

$V_{CUP}$, $V_{CUN}$, $V_{CVP}$, $V_{CVN}$, $V_{CWP}$, $V_{CWN}$

FIG. 3

EP 3 745 587 A2

# FIG. 4

EP 3 745 587 A2

# FIG. 5

COMMUTATION PERIOD — OPERATION PERIOD OF CONVERTER

AC CURRENTS $I_{ULS}$, $I_{VLS}$, $I_{WLS}$ FLOWING TO BYPASS SWITCH 103

LOAD CURRENT (FUNDAMENTAL WAVE IS DOMINANT)

THIRD ZERO-PHASE CURRENT COMPONENT REMAINS

0 — TIME t

AC CURRENTS $I_U$, $I_V$, $I_W$ FLOWING TO FREQUENCY CONVERTER 104

0 — TIME t

OPEN/CLOSE SIGNAL LS* OF BYPASS SWITCH 103

1

0 — TIME t

t2
GATE DEBLOCKING
GDB* = 0 → 1

t3
LOAD CURRENT STARTS
TO COMMUTATE FROM
BYPASS SWITCH 103 TO
FREQUENCY CONVERTER 104

t4
BYPASS SWITCH IS OPENED
(COMMUTATION PERIOD ENDS)

EP 3 745 587 A2

FIG. 6

COMMUTATION PERIOD

OPERATION PERIOD OF CONVERTER

AC CURRENTS $I_{ULS}$, $I_{VLS}$, $I_{WLS}$ FLOWING TO BYPASS SWITCH 103

LOAD CURRENT (FUNDAMENTAL WAVE IS DOMINANT)

THIRD ZERO-PHASE CURRENT ≈ 0

0

TIME t

AC CURRENTS $I_U$, $I_V$, $I_W$ FLOWING TO FREQUENCY CONVERTER 104

0

TIME t

OPEN/CLOSE SIGNAL LS* OF BYPASS SWITCH 103

1

0

TIME t

t2
GATE DEBLOCKING
GDB* = 0→1,
GAC0* = 0→1

t3
LOAD CURRENT STARTS TO COMMUTATE FROM BYPASS SWITCH 103 TO FREQUENCY CONVERTER 104

t4
BYPASS SWITCH IS OPENED (COMMUTATION PERIOD ENDS)
GAC0* = 1→0

EP 3 745 587 A2

EP 3 745 587 A2

*FIG. 7*

## FIG. 8

FIG. 9

FIG. 10

EP 3 745 587 A2

FIG. 11

*FIG. 12*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003088190 A

**Non-patent literature cited in the description**

- **ISUZU HASEGAWA ; SHIZUNORI HAMADA ; KENJI KOBORI ; YUTAKA SHOJI.** Development of Transformerless Multi-Level High-Voltage Inverter. *Meiden,* 2016, vol. 352 (3), 34, , 39

- **M.A MAMUN ; M. TSUKAKOSHI ; K. HASHIMURA ; H. HOSODA ; S.C. PEAK.** Innovation of a large capacity five-level IGBT inverter for Oil and Gas Industry. *2011 IEEE Energy Conversion Congress and Exposition,* 2011, 1964, , 1971